# EUROPEAN PATENT APPLICATION

(11) **EP 1 246 122 A2**
(43) Date of publication of application: **02.10.2002**
(21) Application number: 02007224.5
(22) Date of filing: 26.03.2002
(51) Int. Cl.: G06K 9/46

(54) **Palmprint region dividing device and palmprint region dividing method thereof, and palmprint region dividing program**

(30) Priority: 27.03.2001 JP 2001089377
(71) Applicant: NEC CORPORATION, Tokyo (JP)
(72) Inventor: Nonden, Akira, Minato-ku, Tokyo (JP)
(74) Representative: Glawe, Delfs, Moll & Partner

(57) **Abstract**

The palmprint region dividing device for dividing a palmprint into each specific region includes a ridge line pattern extracting unit (11a) which extracts a ridge line pattern of the palmprint in question from an image of the input palmprint, a hypothenar and thenar regions detecting unit (12a) which detects a hypothenar region and a thenar region using the ridge line pattern extracted, a crossing point detecting unit (13a) which detects a crossing point from the ridge line pattern of a boundary between the hypothenar region and the thenar region, a division direction determining unit (14a) which determins a division direction based on a ridge line direction in the vicinity of the crossing point, and a division position determining unit (15a) which determins a division position which is a position at which the palmprint in question is to be divided into each region based on a boundary between the hypothenar region and the thenar region, a division direction, and a difference in a ridge line pattern in the thenar region and a interdigital creases region.

## Description

### BACKGROUND OF THE INVENTION

### FIELD OF THE INVENTION

The present invention relates to personal authentification using palmprints and, more particularly, to a palmprint region dividing device, a palmprint region dividing method and a palmprint region dividing program for automatically conducting processing of dividing a palmprint of each person into predetermined regions at the time of registration of the palmprint.

### DESCRIPTION OF THE RELATED ART

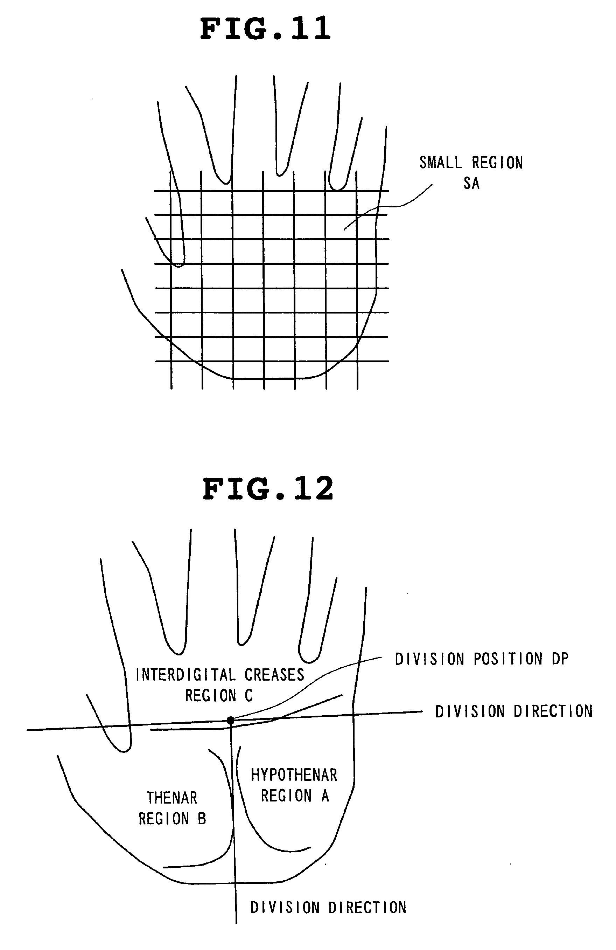

Palmprint is characteristic in varying with each person and remaining the same for life and is used for personal authentification as well as fingerprints. For improving reliability of authentification processing using palmprints and reduce processing time etc., there is a system of dividing a palmprint into predetermined regions and processing them. Fig. 12 is a diagram showing one example of respective regions into which a palmprint is divided, in which a hypothenar region (A), a thenar region (B) and interdigital creases region (C) are shown. Then, as illustrated in Fig. 12, determine a position (or direction) of a division line and a division position for the division into these regions to carry out division.

As conventional palmprint dividing methods, the method of dividing a palmprint using roots of the fingers and structural lines is proposed in Japanese Patent Publication No. 2944602. According to the conventional technique, division position is determined based on a position of a root of a finger and a kind of the finger, and a position of structural lines such as a heart line or a lifeline.

In the above-described conventional technique, however, processing of dividing a palmprint and registering the same can not be conducted automatically but is conducted manually.

The conventional technique recited in Japanese Patent Publication No. 2944602, for example, requires a position of a root of a finger and a kind of the same and a position of a structural line to be obtained. As to the processing of determining these positions, determination is easy by a person with his/her naked eyes but difficult by a computer or a machine in automatic way, so that automatic processing can not be realized.

### SUMMARY OF THE INVENTION

An object of the present invention is to solve the above-described problems and provide a palmprint region dividing device for automatically processing the division of a palmprint into specific regions, a palmprint region dividing method thereof and a palmprint region dividing program.

According to the first aspect of the invention, a palmprint region dividing device for dividing an image of a palmprint, which
with respect to each specific region, compares a ridge line pattern of a palmprint to be divided which is extracted from an image of the palmprint and information about features of a common ridge line pattern at the specific region of a palmprint to detect the specific region from the image of the palmprint in question and divide the image of the palmprint in question into each the specific region.

In the preferred construction, the palmprint region dividing device comprises
ridge line pattern extracting means for extracting a ridge line pattern of the palmprint in question from an image of the palmprint input,
hypothenar and thenar regions detecting means for detecting a hypothenar region and a thenar region using the ridge line pattern extracted,
crossing point detecting means for detecting a crossing point from the ridge line pattern of a boundary between the hypothenar region and the thenar region,
division direction determining means for determining a division direction based on a ridge line direction in the vicinity of the crossing point, and
division position determining means for determining a division line for dividing the palmprint into three regions, the hypothenar region, the thenar region and a interdigital creases region, based on the crossing point, the division direction and the thenar region.

In another preferred construction, the ridge line pattern extracting means divides the palmprint into a plurality of small regions of predetermined size in which a ridge line direction is constant, and
the hypothenar and thenar regions detecting means determines, as a hypothenar region direction, a direction whose frequency is the highest among ridge line directions in respective the small regions in the half of the palmprint on the side of the hypothenar region to determine a largest continuous region in the small regions within a predetermined direction difference from the hypothenar region direction as the hypothenar region.

In another preferred construction, the ridge line pattern extracting means divides the palmprint into a plurality of small regions of predetermined size in which a ridge line direction is constant, and
the hypothenar and thenar regions detecting means determines, as a hypothenar region direction, a direction whose frequency is the highest among ridge line directions in respective the small regions in the half of the palmprint on the side of the hypothenar region to determine a largest continuous region in the small regions within a predetermined direction difference from the hypothenar region direction as the hypothenar region, and
determines, as the thenar region, a largest continuous region in the small regions in which a ridge line direction orients to the finger side within a predetermined direction difference from the hypothenar region direction and which locates on the thumb side within a predetermined range from the hypothenar region.

In another preferred construction, the division position determining means determines a straight line passing through the crossing point and being in parallel to the division direction as a hypothenar region thenar region dividing line, determines, among straight lines vertical to the division direction intersecting with the thenar region, a straight line closest to the finger side of the palmprint image in question as a interdigital creases region thenar and hypothenar regions of palm region dividing line and determines a crossing point between the hypothenar region thenar region dividing line and the interdigital creases region thenar and hypothenar regions of palm region dividing line as a division position.

In another preferred construction, the ridge line pattern extracting means divides the palmprint into a plurality of small regions of predetermined size in which a ridge line direction is constant,
the hypothenar and thenar regions detecting means determines, as a hypothenar region direction, a direction whose frequency is the highest among ridge line directions in respective the small regions in the half of the palmprint on the side of the hypothenar region to determine a largest continuous region in the small regions within a predetermined direction difference from the hypothenar region direction as the hypothenar region, and
the division position determining means determines a straight line passing through the crossing point and being in parallel to the division direction as a hypothenar region thenar region dividing line, determines, among straight lines vertical to the division direction intersecting with the thenar region, a straight line closest to the finger side of the palmprint image in question as a interdigital creases region thenar and hypothenar regions of palm region dividing line and determines a crossing point between the hypothenar region thenar region dividing line and the interdigital creases region thenar and hypothenar regions of palm region dividing line as a division position.

In another preferred construction, the ridge line pattern extracting means divides the palmprint into a plurality of small regions of predetermined size in which a ridge line direction is constant,
the hypothenar and thenar regions detecting means determines, as a hypothenar region direction, a direction whose frequency is the highest among ridge line directions in respective the small regions in the half of the palmprint on the side of the hypothenar region to determine a largest continuous region in the small regions within a predetermined direction difference from the hypothenar region direction as the hypothenar region, and
determines, as the thenar region, a largest continuous region in the small regions in which a ridge line direction orients to the finger side within a predetermined direction difference from the hypothenar region direction and which locates on the thumb side within a predetermined range from the hypothenar region, and
the division position determining means determines a straight line passing through the crossing point and being in parallel to the division direction as a hypothenar region thenar region dividing line, determines, among straight lines vertical to the division direction intersecting with the thenar region, a straight line closest to the finger side of the palmprint image in question as a interdigital creases region thenar and hypothenar regions of palm region dividing line and determines a crossing point between the hypothenar region thenar region dividing line and the interdigital creases region thenar and hypothenar regions of palm region dividing line as a division position.

In another preferred construction, the division direction determining means obtains two directions, a direction from a ridge line direction in the vicinity of the crossing point to the finger side of the crossing point and a direction on the hypothenar region side of the crossing point, as candidates for the division direction, and
the division position determining means determines the division position and the division direction based on angels formed by respective the division direction candidates with the hypothenar region direction and a ridge line direction in the vicinity of the division position, respectively.

In another preferred construction, the ridge line pattern extracting means divides the palmprint into a plurality of small regions of predetermined size in which a ridge line direction is constant,
the hypothenar and thenar regions detecting means determines, as a hypothenar region direction, a direction whose frequency is the highest among ridge line directions in respective the small regions in the half of the palmprint on the side of the hypothenar region to determine a largest continuous region in the small regions within a predetermined direction difference from the hypothenar region direction as the hypothenar region,
the division direction determining means obtains two directions, a direction from a ridge line direction in the vicinity of the crossing point to the finger side of the crossing point and a direction on the hypothenar region side of the crossing point, as candidates for the division direction, and
the division position determining means determines the division position and the division direction based on angels formed by respective the division direction candidates with the hypothenar region direction and a ridge line direction in the vicinity of the division position, respectively.

In another preferred construction, the ridge line pattern extracting means divides the palmprint into a plurality of small regions of predetermined size in which a ridge line direction is constant,
the hypothenar and thenar regions detecting means determines, as a hypothenar region direction, a direction whose frequency is the highest among ridge line directions in respective the small regions in the half of the palmprint on the side of the hypothenar region to determine a largest continuous region in the small regions within a predetermined direction difference from the hypothenar region direction as the hypothenar region, and
determines, as the thenar region, a largest continuous region in the small regions in which a ridge line direction orients to the finger side within a predetermined direction difference from the hypothenar region direction and which locates on the thumb side within a predetermined range from the hypothenar region,
the division direction determining means obtains two directions, a direction from a ridge line direction in the vicinity of the crossing point to the finger side of the crossing point and a direction on the hypothenar region side of the crossing point, as candidates for the division direction, and
the division position determining means determines the division position and the division direction based on angels formed by respective the division direction candidates with the hypothenar region direction and a ridge line direction in the vicinity of the division position, respectively.

In another preferred construction, the division position determining means determines a straight line passing through the crossing point and being in parallel to the division direction as a hypothenar region thenar region dividing line, determines, among straight lines vertical to the division direction intersecting with the thenar region, a straight line closest to the finger side of the palmprint image in question as a interdigital creases region thenar and hypothenar regions of palm region dividing line and determines a crossing point between the hypothenar region thenar region dividing line and the interdigital creases region thenar and hypothenar regions of palm region dividing line as a division position,
the division direction determining means obtains two directions, a direction from a ridge line direction in the vicinity of the crossing point to the finger side of the crossing point and a direction on the hypothenar region side of the crossing point, as candidates for the division direction, and
the division position determining means. determines the division position and the division direction based on angels formed by respective the division direction candidates with the hypothenar region direction and a ridge line direction in the vicinity of the division position, respectively.

In another preferred construction, the division position determining means determines, as the division direction, one of the division direction candidates which has a smaller total value of an absolute value of a difference between an angle formed with the hypothenar region direction and a first predetermined angle and an absolute value of a difference between an angle formed with a ridge line direction in the vicinity of the division position and a second predetermined angle.

In another preferred construction, the ridge line pattern extracting means divides the palmprint into a plurality of small regions of predetermined size in which a ridge line direction is constant,
the hypothenar and thenar regions detecting means determines, as a hypothenar region direction, a direction whose frequency is the highest among ridge line directions in respective the small regions in the half of the palmprint on the side of the hypothenar region to determine a largest continuous region in the small regions within a predetermined direction difference from the hypothenar region direction as the hypothenar region,
the division direction determining means obtains two directions, a direction from a ridge line direction in the vicinity of the crossing point to the finger side of the crossing point and a direction on the hypothenar region side of the crossing point, as candidates for the division direction, and
the division position determining means determines the division position and the division direction based on angels formed by respective the division direction candidates with the hypothenar region direction and a ridge line direction in the vicinity of the division position, respectively, and
determines, as the division direction, one of the division direction candidates which has a smaller total value of an absolute value of a difference between an angle formed with the hypothenar region direction and a first predetermined angle and an absolute value of a difference between an angle formed with the ridge line direction in the vicinity of the division position and a second predetermined angle.

In another preferred construction, the division position determining means determines, as the division direction, one of the division direction candidates which has a smaller total value of an absolute value of a difference between an angle formed with the hypothenar region direction and a first predetermined angle and an absolute value of a difference between an angle formed with a ridge line direction in the vicinity of the division position and a second predetermined angle, the first predetermined angle being about 35 degrees and the second predetermined angle being about 55 degrees.

In another preferred construction, the ridge line pattern extracting means divides the palmprint into a plurality of small regions of predetermined size in which a ridge line direction is constant,
the hypothenar and thenar regions detecting means determines, as a hypothenar region direction, a direction whose frequency is the highest among ridge line directions in respective the small regions in the half of the palmprint on the side of the hypothenar region to determine a largest continuous region in the small regions within a predetermined direction difference from the hypothenar region direction as the hypothenar region,
the division direction determining means obtains two directions, a direction from a ridge line direction in the vicinity of the crossing point to the finger side of the crossing point and a direction on the hypothenar region side of the crossing point, as candidates for the division direction, and
the division position determining means determines the division position and the division direction based on angels formed by respective the division direction candidates with the hypothenar region direction and a ridge line direction in the vicinity of the division position, respectively, and
determines, as the division direction, one of the division direction candidates which has a smaller total value of an absolute value of a difference between an angle formed with the hypothenar region direction and a first predetermined angle and an absolute value of a difference between an angle formed with the ridge line direction in the vicinity of the division position and a second predetermined angle, the first predetermined angle being about 35 degrees and the second predetermined angle being about 55 degrees.

According to the second aspect of the invention, a palmprint region dividing method of dividing an image of a palmprint, comprising the step of,
with respect to each specific region, comparing a ridge line pattern of a palmprint to be divided which is extracted from an image of the palmprint and information about features of a common ridge line pattern at the specific region of a palmprint to detect the specific region from the image of the palmprint in question and divide the image of the palmprint in question into each the specific region.

In the preferred construction, the palmprint region dividing method further comprises
a ridge line pattern extracting step of extracting a ridge line pattern of the palmprint in question from an image of the palmprint input,
a hypothenar and thenar regions detecting step of detecting a hypothenar region and a thenar region using the ridge line pattern extracted,
a crossing point detecting step of detecting a crossing point from the ridge line pattern of a boundary between the hypothenar region and the thenar region,
a division direction determining step of determining a division direction based on a ridge line direction in the vicinity of the crossing point, and
a division position determining step of determining a division line for dividing the palmprint into three regions, the hypothenar region, the thenar region and a interdigital creases region, based on the crossing point, the division direction and the thenar region.

In another preferred construction, at the ridge line pattern extracting step,
the palmprint is divided into a plurality of small regions of predetermined size in which a ridge line direction is constant, and
at the hypothenar and thenar regions detecting step,
a direction whose frequency is the highest among ridge line directions in respective the small regions in the half of the palmprint on the side of the hypothenar region is determined as a hypothenar region direction to determine a largest continuous region in the small regions within a predetermined direction difference from the hypothenar region direction as the hypothenar region.

In another preferred construction, at the ridge line pattern extracting step,
the palmprint is divided into a plurality of small regions of predetermined size in which a ridge line direction is constant, and
at the hypothenar and thenar regions detecting step,
a direction whose frequency is the highest among ridge line directions in respective the small regions in the half of the palmprint on the side of the hypothenar region is determined as a hypothenar region direction to determine a largest continuous region in the small regions within a predetermined direction difference from the hypothenar region direction as the hypothenar region, and
a largest continuous region in the small regions in which a ridge line direction orients to the finger side within a predetermined direction difference from the hypothenar region direction and which locates on the thumb side within a predetermined range from the hypothenar region is determined as the thenar region.

In another preferred construction, at the division position determining step, a straight line passing through the crossing point and being in parallel to the division direction is determined as a hypothenar region · thenar region dividing line, among straight lines vertical to the division direction intersecting with the thenar region, a straight line closest to the finger side of the palmprint image in question is determined as a interdigital creases region · thenar and hypothenar regions of palm region dividing line and a crossing point between the hypothenar region · thenar region dividing line and the interdigital creases region · thenar and hypothenar regions of palm region dividing line is determined as a division position.

In another preferred construction, at the ridge line pattern extracting step,
the palmprint is divided into a plurality of small regions of predetermined size in which a ridge line direction is constant,
at the hypothenar and thenar regions detecting step,
a direction whose frequency is the highest among ridge line directions in respective the small regions in the half of the palmprint on the side of the hypothenar region is determined as a hypothenar region direction to determine a largest continuous region in the small regions within a predetermined direction difference from the hypothenar region direction as the hypothenar region, and
at the division position determining step, a straight line passing through the crossing point and being in parallel to the division direction is determined as a hypothenar region · thenar region dividing line, among straight lines vertical to the division direction intersecting with the thenar region, a straight line closest to the finger side of the palmprint image in question is determined as a interdigital creases region · thenar and hypothenar regions of palm region dividing line and a crossing point between the hypothenar region · thenar region dividing line and the interdigital creases region · thenar and hypothenar regions of palm region dividing line is determined as a division position.

In another preferred construction, at the ridge line pattern extracting step,
the palmprint is divided into a plurality of small regions of predetermined size in which a ridge line direction is constant,
at the hypothenar and thenar regions detecting step
a direction whose frequency is the highest among ridge line directions in respective the small regions in the half of the palmprint on the side of the hypothenar region is determined as a hypothenar region direction to determine a largest continuous region in the small regions within a predetermined direction difference from the hypothenar region direction as the hypothenar region, and
a largest continuous region in the small regions in which a ridge line direction orients to the finger side within a predetermined direction difference from the hypothenar region direction and which locates on the thumb side within a predetermined range from the hypothenar region is determined as the thenar region, and
at the division position determining step, a straight line passing through the crossing point and being in parallel to the division direction is determined as a hypothenar region · thenar region dividing line, among straight lines vertical to the division direction intersecting with the thenar region, a straight line closest to the finger side of the palmprint image in question is determined as a interdigital creases region · thenar and hypothenar regions of palm region dividing line and a crossing point between the hypothenar region · thenar region dividing line and the interdigital creases region · thenar and hypothenar regions of palm region dividing line is determined as a division position.

In another preferred construction, at the division direction determining step,
two directions are obtained as candidates for the division direction, a direction from a ridge line direction in the vicinity of the crossing point to the finger side of the crossing point and a direction on the hypothenar region side of the crossing point, and
at the division position determining step, the division position and the division direction are determined based on angels formed by respective the division direction candidates with the hypothenar region direction and a ridge line direction in the vicinity of the division position, respectively.

In another preferred construction, at the ridge line pattern extracting step, the palmprint is divided into a plurality of small regions of predetermined size in which a ridge line direction is constant,
at the hypothenar and thenar regions detecting step,
a direction whose frequency is the highest among ridge line directions in respective the small regions in the half of the palmprint on the side of the hypothenar region is determined as a hypothenar region direction to determine a largest continuous region in the small regions within a predetermined direction difference from the hypothenar region direction as the hypothenar region,
at the division direction determining step,
two directions are obtained as candidates for the division direction, a direction from a ridge line direction in the vicinity of the crossing point to the finger side of the crossing point and a direction on the hypothenar region side of the crossing point, and
at the division position determining step,
the division position and the division direction are determined based on angels formed by respective the division direction candidates with the hypothenar region direction and a ridge line direction in the vicinity of the division position, respectively.

In another preferred construction, at the ridge line pattern extracting step,
the palmprint is divided into a plurality of small regions of predetermined size in which a ridge line direction is constant,
at the hypothenar and thenar regions detecting step
a direction whose frequency is the highest among ridge line directions in respective the small regions in the half of the palmprint on the side of the hypothenar region is determined as a hypothenar region direction to determine a largest continuous region in the small regions within a predetermined direction difference from the hypothenar region direction as the hypothenar region, and
a largest continuous region in the small regions in which a ridge line direction orients to the finger side within a predetermined direction difference from the hypothenar region direction and which locates on the thumb side within a predetermined range from the hypothenar region is determined as the thenar region,
at the division direction determining step, two directions are obtained as candidates for the division direction, a direction from a ridge line direction in the vicinity of the crossing point to the finger side of the crossing point and a direction on the hypothenar region side of the crossing point, and
at the division position determining step, the division position and the division direction are determined based on angels formed by respective the division direction candidates with the hypothenar region direction and a ridge line direction in the vicinity of the division position, respectively.

In another preferred construction, at the division position determining step, a straight line passing through the crossing point and being in parallel to the division direction is determined as a hypothenar region · thenar region dividing line, among straight lines vertical to the division direction intersecting with the thenar region, a straight line closest to the finger side of the palmprint image in question is determined as a interdigital creases region · thenar and hypothenar regions of palm region dividing line and a crossing point between the hypothenar region · thenar region dividing line and the interdigital creases region · thenar and hypothenar regions of palm region dividing line is determined as a division position,
at the division direction determining step,
two directions are obtained as candidates for the division direction, a direction from a ridge line direction in the vicinity of the crossing point to the finger side of the crossing point and a direction on the hypothenar region side of the crossing point, and
at the division position determining step,
the division position and the division direction are determined based on angels formed by respective the division direction candidates with the hypothenar region direction and a ridge line direction in the vicinity of the division position, respectively.

In another preferred construction, at the division direction determining step,
two directions are obtained as candidates for the division direction, a direction from a ridge line direction in the vicinity of the crossing point to the finger side of the crossing point and a direction on the hypothenar region side of the crossing point, and
at the division position determining step,
the division position and the division direction are determined based on angels formed by respective the division direction candidates with the hypothenar region direction and a ridge line direction in the vicinity of the division position, respectively, and
one of the division direction candidates which has a smaller total value of an absolute value of a difference between an angle formed with the hypothenar region direction and a first predetermined angle and an absolute value of a difference between an angle formed with the ridge line direction in the vicinity of the division position and a second predetermined angle is determined as the division direction.

In another preferred construction, at the ridge line pattern extracting step,
the palmprint is divided into a plurality of small regions of predetermined size in which a ridge line direction is constant,
at the hypothenar and thenar regions detecting step, a direction whose frequency is the highest among ridge line directions in respective the small regions in the half of the palmprint on the side of the hypothenar region is determined as a hypothenar region direction to determine a largest continuous region in the small regions within a predetermined direction difference from the hypothenar region direction as the hypothenar region,
at the division direction determining step,
two directions are obtained as candidates for the division direction, a direction from a ridge line direction in the vicinity of the crossing point to the finger side of the crossing point and a direction on the hypothenar region side of the crossing point, and
at the division position determining step,
the division position and the division direction are determined based on angels formed by respective the division direction candidates with the hypothenar region direction and a ridge line direction in the vicinity of the division position, respectively, and
one of the division direction candidates which has a smaller total value of an absolute value of a difference between an angle formed with the hypothenar region direction and a first predetermined angle and an absolute value of a difference between an angle formed with the ridge line direction in the vicinity of the division position and a second predetermined angle is determined as the division direction.

In another preferred construction, at the division direction determining step,
two directions are obtained as candidates for the division direction, a direction from a ridge line direction in the vicinity of the crossing point to the finger side of the crossing point and a direction on the hypothenar region side of the crossing point, and
at the division position determining step,
the division position and the division direction are determined based on angels formed by respective the division direction candidates with the hypothenar region direction and a ridge line direction in the vicinity of the division position, respectively, and
one of the division direction candidates which has a smaller total value of an absolute value of a difference between an angle formed with the hypothenar region direction and a first predetermined angle and an absolute value of a difference between an angle formed with the ridge line direction in the vicinity of the division position and a second predetermined angle is determined as the division direction, the first predetermined angle being about 35 degrees and the second predetermined angle being about 55 degrees.

In another preferred construction, at the ridge line pattern extracting step,
the palmprint is divided into a plurality of small regions of predetermined size in which a ridge line direction is constant,
at the hypothenar and thenar regions detecting step,
a direction whose frequency is the highest among ridge line directions in respective the small regions in the half of the palmprint on the side of the hypothenar region is determined as a hypothenar region direction to determine a largest continuous region in the small regions within a predetermined direction difference from the hypothenar region direction as the hypothenar region,
at the division direction determining step,
two directions are obtained as candidates for the division direction, a direction from a ridge line direction in the vicinity of the crossing point to the finger side of the crossing point and a direction on the hypothenar region side of the crossing point, and
at the division position determining step,
the division position and the division direction are determined based on angels formed by respective the division direction candidates with the hypothenar region direction and a ridge line direction in the vicinity of the division position, respectively, and
one of the division direction candidates which has a smaller total value of an absolute value of a difference between an angle formed with the hypothenar region direction and a first predetermined angle and an absolute value of a difference between an angle formed with the ridge line direction in the vicinity of the division position and a second predetermined angle is determined as the division direction, the first predetermined angle being about 35 degrees and the second predetermined angle being about 55 degrees.

According to another aspect of the invention, a palmprint region dividing program for dividing an image of a palmprint by controlling a computer, comprising the function of,
with respect to each specific region, comparing a ridge line pattern of a palmprint to be divided which is extracted from an image of the palmprint and information about features of a common ridge line pattern at the specific region of a palmprint to detect the specific region from the image of the palmprint in question and divide the image of the palmprint in question into each the specific region.

The palmprint region dividing device according to the present invention includes a ridge line pattern extracting unit for extracting a direction pattern of a ridge line from an image obtained from an impressed palmprint which is taken in and a division position determining unit for determining a division position based on a pattern of a ridge line at a specific region. As a result, input of an impressed palmprint image enables automatic calculation and output of a region dividing position.

Other objects, features and advantages of the present invention will become clear from the detailed description given herebelow.

### BRIEF DESCRIPTION OF THE DRAWINGS

The present invention will be understood more fully from the detailed description given herebelow and from the accompanying drawings of the preferred embodiment of the invention, which, however, should not be taken to be limitative to the invention, but are for explanation and understanding only.

In the drawings:
Fig. 1 is a block diagram showing a structure of a palmprint region dividing device according to a first embodiment of the present invention;
Fig. 2 is a flow chart for use in explaining processing of the palmprint region dividing device according to the first embodiment of the present invention;
Fig. 3 is a block diagram showing a structure of a palmprint region dividing device according to a second embodiment of the present invention;
Fig. 4 is a flow chart for use in explaining processing of the palmprint region dividing device according to the second embodiment of the present invention;
Fig. 5 is a diagram for use in explaining a method of obtaining a division direction from the vicinity of a crossing point in the second embodiment of the present invention;
Fig. 6 is a diagram showing a region division position in the second embodiment of the present invention;
Fig. 7 is a block diagram showing a structure of a palmprint region dividing device according to a third embodiment of the present invention;
Fig. 8 is a flow chart for use in explaining processing of the palmprint region dividing device according to the third embodiment of the present invention;
Fig. 9 is a diagram for use in explaining a method of obtaining a division direction from the vicinity of a crossing point in the third embodiment of the present invention;
Fig. 10 is a diagram showing one embodiment of a structure having a recording medium in which a palmprint region dividing program is recorded according to the present invention;
Fig. 11 is a diagram for use in explaining division of a palmprint into small regions according to the embodiment of the present invention;
Fig. 12 is a diagram showing respective regions into which a palmprint is divided;
Fig. 13 is a diagram showing a hypothenar region;
Fig. 14 is a diagram showing a relationship between directions of ridge lines in a hypothenar region and a thenar region;
Fig. 15 is a diagram showing directions of ridge lines in the vicinity of a crossing point.

### DESCRIPTION OF THE PREFERRED EMBODIMENT

The preferred embodiment of the present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to unnecessary obscure the present invention.

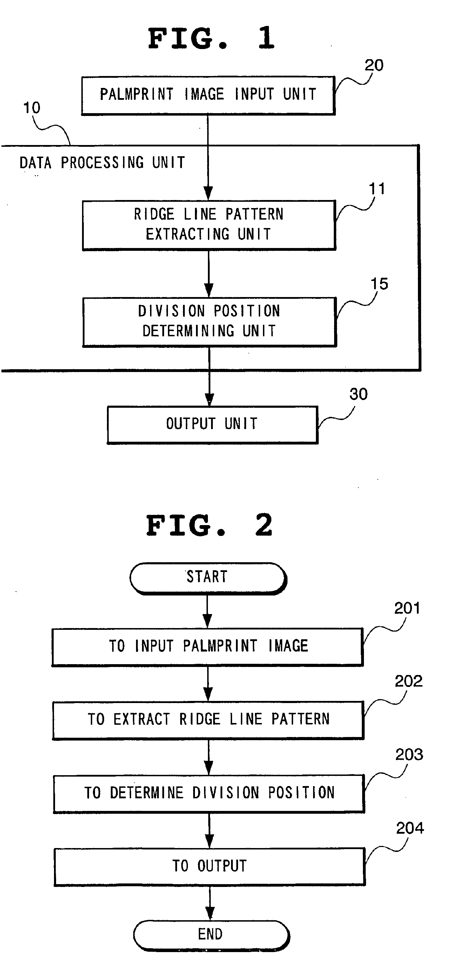

Fig. 1 is a block diagram showing a structure of a palmprint region dividing device according to a first embodiment of the present invention.

With reference to Fig. 1, the palmprint region dividing device according to the present embodiment includes a palmprint image input unit 20, a data processing unit 10 and an output unit 30.

The palmprint image input unit 20 transfers an image of a palmprint taken into the device by a scanner or the line to the data processing unit 10. Used as the palmprint image input unit 20 are, for example, a scanner for accepting a palmprint image and an image data base for managing image data of a palmprint.

The data processing unit 10 analyzes image data of a palmprint input through the palmprint image input unit 20 and divides the palmprint into predetermined regions to output the divided palmprint to the output unit 30. Therefore, the data processing unit 10 includes a ridge line pattern extracting unit 11 and a division position determining unit 15 which operate in a manner as summarized in the following.

The ridge line pattern extracting unit 11 analyzes a pattern of a ridge line of an input palmprint image to divide the palmprint into a plurality of small regions (SA) of predetermined size as exemplified in Fig. 11. Ridge lines here represent minute tendons similar to fingerprints which are found on the whole palm and include none of wrinkles of a palm shown in the palmprint image. The ridge line pattern extracting unit 11 divides the input palmprint image and analyzes an image of each divisional small region to determine a direction of a ridge line in each small region. In the example of Fig. 11, the ridge line pattern extracting unit 11 divides a palmprint image into a plurality of small lattice-formed regions. Because when a palmprint image is minutely divided into a plurality of small regions, ridge lines in each of the divisional small regions will face to substantially the same direction, the direction of a ridge line in each small region can be determined with ease.

The division position determining unit 15, based on data of a ridge line pattern in a specific region (a hypothenar region, a thenar region, a interdigital creases region and the like) of a palm and data of a direction of a ridge line in a small region in a palmprint image analyzed by the ridge line pattern extracting unit 11, compares the data and finds to which region of palmprint image the specific region corresponds to obtain a division position at which the palm is divided into each region. Data of a ridge line pattern here represents data indicative of regular features of ridge lines including a direction and a length of a ridge line at each region such as a hypothenar region, a thenar region and a interdigital creases region, a positional relationship among the respective regions and a difference in a direction formed by a ridge line in each region.

The output unit 30 outputs information about division of each region of the palmprint image analyzed and determined by the data processing unit 10. Output destinations are an impressed palmprint registration device for authenticating a palmprint, a display device such as a display and a storage device such as a hard disc. Used as information on division of each region to be output may be data indicative of region division position and direction, data of divided images and ridge line direction data.

Next, operation of the present embodiment will be detailed with reference to the drawings. Fig. 2 is a flow chart for use in explaining processing of the palmprint region dividing device accordiing to the present embodiment

With reference to Fig. 2, in the palmprint region dividing device of the present embodiment, first an image of an impressed palmprint is applied to the palmprint image input unit 20 (Step 201).

The ridge line pattern extracting unit 11 responsively obtains a direction of a ridge line in each small region from the input palmprint image (Step 202). As this method of obtaining a direction of a ridge line, conventional techniques such as the method disclosed in Japanese Patent Laying-Open (Kokai) No. Heisei 09-167230 can be used.

Then, based on data of a ridge line pattern (regular features that a ridge line exhibits) commonly seen in a specific region (hypothenar region, thenar region, interdigital creases region, etc.) of a palm, the division position determining unit 15 finds in which region of these specific regions the palmprint image exists to obtain a division position for dividing the palmprint image into these regions (Step 203). Based on, for example, such ridge line patterns commonly seen in a specific region of a palm as that at a root of a finger on a palm, crossing points are arranged regularly corresponding to each finger and that on the little finger side of the palm, there is a region where ridge lines are arranged approximately in parallel to each other, the unit detects a specific region such as a root of a finger or a little finger side region of the palm from the palm image to cut out the specific region.

The output unit 30 outputs the obtained division position and direction (Step 204). The output unit 30 notifies a detection result of the division position obtained by the palmprint region dividing device, for example, to an authentification device which actually executes collation and search of a palmprint based on the division position detection result. In addition, a detection result of a division position may be displayed on a display, printed by a printer or processed in other way.

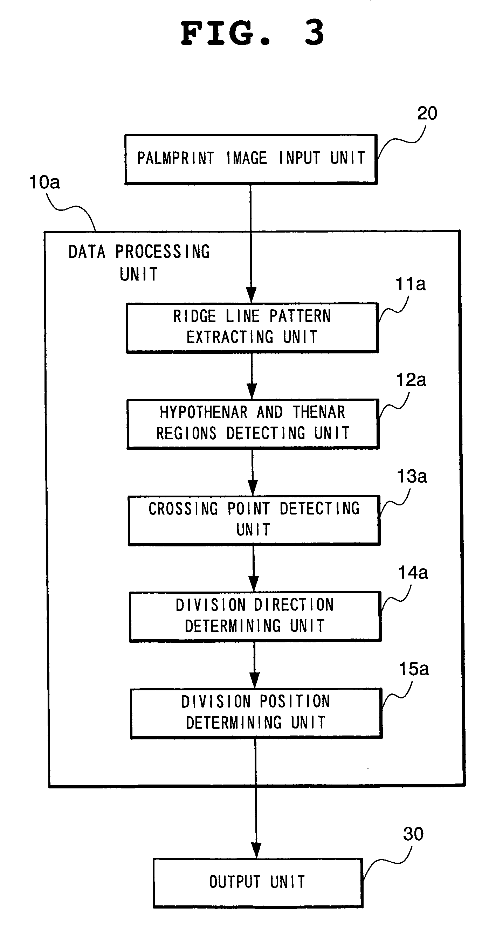

Next, a second embodiment of the present invention will be described in detail with reference to the drawings. Fig. 3 is a block diagram showing a structure of a palmprint region dividing device according to the present embodiment.

With reference to Fig. 3, the palmprint region dividing device according to the present embodiment includes a palmprint image input unit 20, a data processing unit 10a and an output unit 30, which is different from the first embodiment in the structure and processing of the data processing unit 10a.

The data processing unit 10a of the present embodiment includes a ridge line pattern extracting unit 11a, a hypothenar and thenar regions detecting unit 12a, a crossing point detecting unit 13a, a division direction determining unit 14a and a division position determining unit 15a, operation of which units is summarized as follows.

The ridge line pattern extracting unit 11a, similarly to the ridge line pattern extracting unit 11 of the first embodiment, divides an input palmprint image into small regions of predetermined size within which a direction of a ridge line is considered to be constant to obtain a direction of a ridge line in each small region. Here, since among the respective regions of the palmprint, ridge lines at the hypothenar region can be more clearly recognized than those at the other regions, detection starts with the region of the hypothenar region in the present embodiment. In a common pattern of ridge lines at the hypothenar region, ridge lines are arranged in parallel to each other.

The hypothenar and thenar regions detecting unit 12a selects and determines, as a direction of the hypothenar region, a direction whose frequency is the highest among directions of ridge lines at the respective divisional small regions in the half of the palmprint image on the side of the hypothenar region. Then, among the respective divisional small regions in the half on the hypothenar region side, the unit determines a small region in which a direction of a ridge line is within a predetermined error from the direction of the hypothenar region and considers the determined region as a candidate region for hypothenar region. Then, among the candidate regions for hypothenar region, a largest continuous region is determined as a hypothenar region. Moreover, the hypothenar and thenar regions detecting unit 12a selects a small region which is located on the side closer to the thumb rather than the hypothenar region and in which the direction of a ridge line orients more to the finger side than the direction of the hypothenar region and determines the selected small region as a thenar region.

The crossing point determining unit 13a searches for a place which is located outside the hypothenar region to the side of the thenar region and at which a ridge line traced on the palm from the finger side of the palm to the wrist side branches into the hypothenar region side and the thenar region side and determines the searched place as a crossing point.

The division direction determining unit 14a determines a direction from the crossing point toward the finger side of the palm as a division direction.

The division position determining unit 15a obtains a hypothenar region · thenar region dividing line for the division between the hypothenar region and the thenar region and a interdigital creases region · thenar and hypothenar regions of palm region dividing line for the division between the hypothenar region and the thenar region, and the interdigital creases region and determines a crossing point between the hypothenar region · thenar region dividing line and the interdigital creases region · thenar and hypothenar regions of palm region dividing line as a division position.

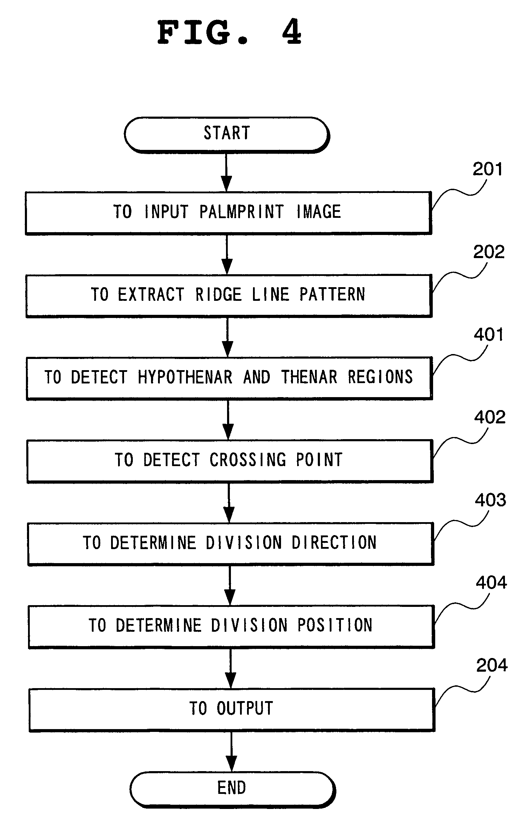

Next, operation of the present embodiment will be described in detail with reference to the drawings. Fig. 4 is a flow chart for use in explaining processing of the palmprint region dividing device according to the present embodiment.

With reference to Fig. 4, first in the present embodiment, input an image of an impressed palmprint to the palmprint image input unit 20 (Step 201).

The ridge line pattern extracting unit 11a obtains a direction of a ridge line in each small region from the input palmprint image (Step 202).

The hypothenar and thenar regions detecting unit 12a selects, as a direction of the hypothenar region, a direction of a ridge line whose frequency is the highest among directions at the respective divisional small regions in the half of the impressed region on the side of the hypothenar region. Then, the unit considers a small region in which a direction of a ridge line falls within a predetermined range of error from the selected direction of the hypothenar region as a candidate region for a hypothenar region. Then, among the candidate regions for a hypothenar region, a largest continuous region is determined as a hypothenar region. Then, the hypothenar and thenar regions detecting unit 12a selects a small region which is located on the side closer to the thumb rather than the hypothenar region and in which the direction of a ridge line orients to the palm finger side within a predetermined range from the direction of the hypothenar region and determines a largest continuous region in the selected small region as a thenar region (Step 401).

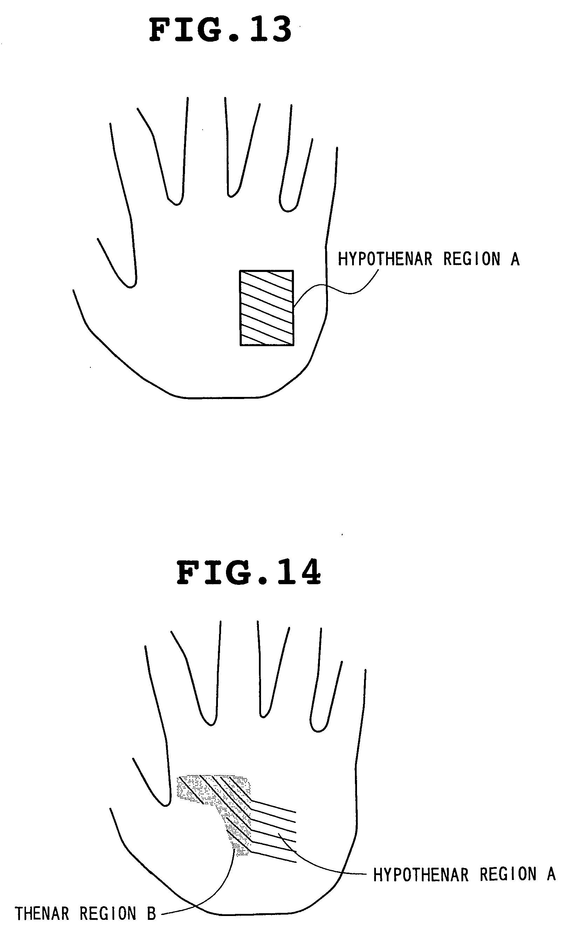

As shown in Fig. 13, since on the palm, the hypothenar region (A) has many ridge lines located substantially in parallel to each other in the same direction, this method enables a position of the hypothenar region (A) to be specified. Also as shown in Fig. 14, since the directions of ridge lines change toward the side of the fingers on the palm in an region spreading from the hypothenar region (A) to the thenar region (B), this method enables an region of the thenar region (B) on the side of the hypothenar region to be specified.

The crossing point determining unit 13a searches for a place which is outside the hypothenar region to the side of the thenar region and at which a ridge line traced from the side of the fingers of the palm to the wrist side branches into the hypothenar region side and the thenar region side and determines the searched place as a crossing point (Step 402).

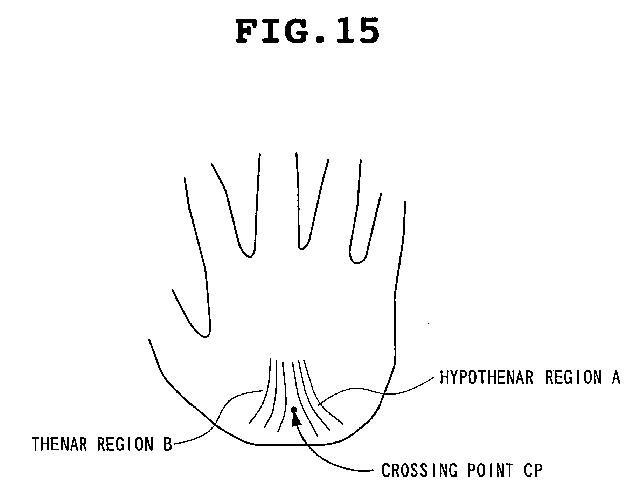

As shown in Fig. 15, since in both the hypothenar region (A) and the thenar region (B) in the vicinity of the wrist, ridge lines run toward the outer periphery of the palm, crossing points (CP) are generated without fail to enable this method to detect a crossing point (CP).

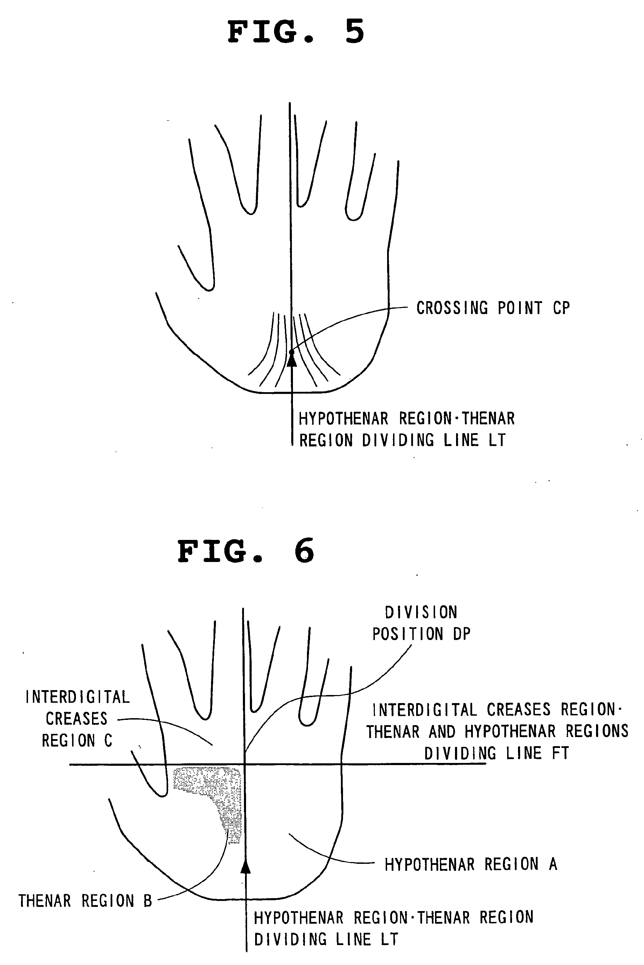

The division direction determining unit 14a, as shown in Fig. 5, determines a direction of a ridge line running from the crossing point (CP) to the finger side of the palm as a division direction (Step 403).

The division position determining unit 15a, as shown in Fig. 6, considers a straight line passing through the crossing point (CP) and located in parallel to the division direction as a hypothenar region · thenar region dividing line (LT), determines, among straight lines vertical to the division direction intersecting with the thenar region, one closest to the finger side of the palm as a interdigital creases region · thenar and hypothenar regions of palm region dividing line (FT) and considers a crossing point between the hypothenar region · thenar region dividing line (LT) and the interdigital creases region · thenar and hypothenar regions of palm region dividing line (FT) as a division position (DP) (Step 404).

The output unit 30 outputs the obtained division position and direction (Step 204).

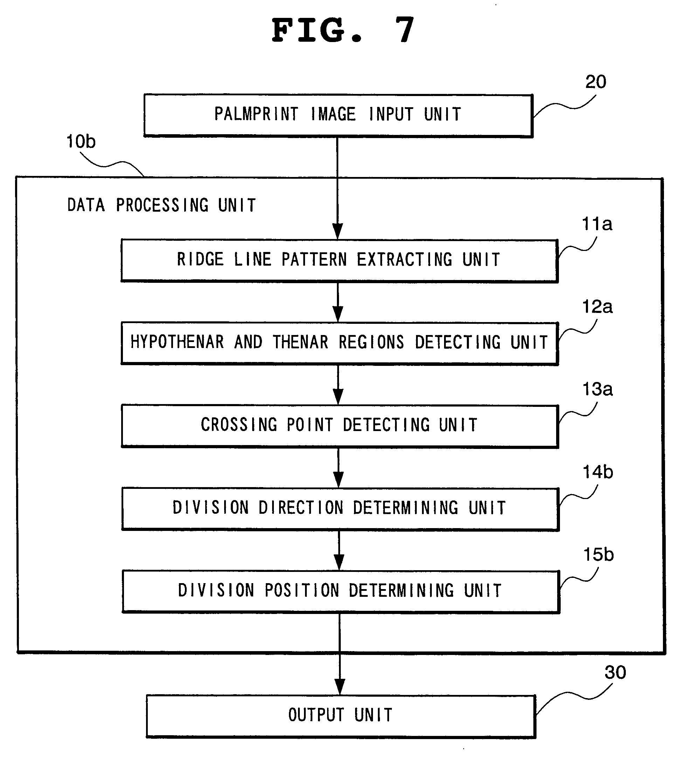

Next, a third embodiment of the present invention will be described in detail with reference to the drawings. Fig. 7 is a block diagram showing a structure of a palmprint region dividing device according to the present embodiment.

With reference to Fig. 7, the third embodiment of the present invention differs from the second embodiment in the functions of a division direction determining unit 14b and a division position determining unit 15b at a data processing unit 10b.

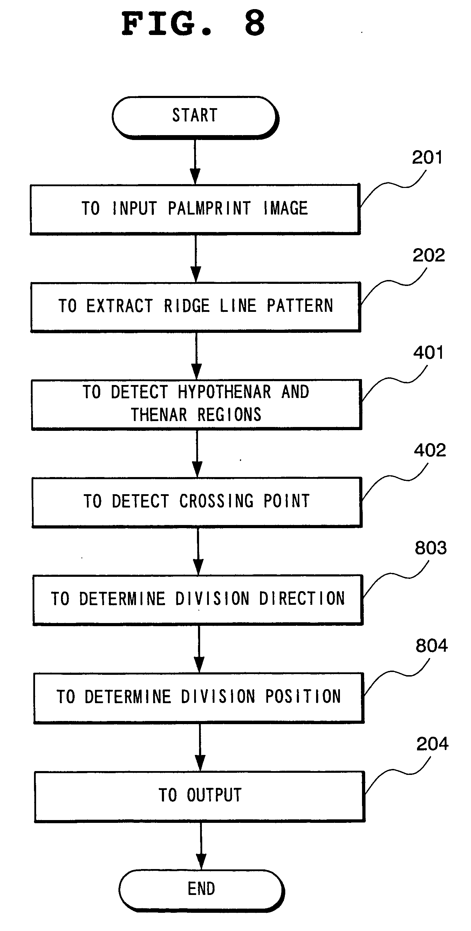

Fig. 8 is a flow chart for use in explaining processing conducted by the palmprint region dividing device according to the present embodiment. With reference to Fig. 8, the processing of the present embodiment differs from that of the second embodiment shown in Fig. 4 in the division direction determination processing at Step 803 and the division position determination processing at Step 804. The remaining steps are the same as those of the second embodiment.

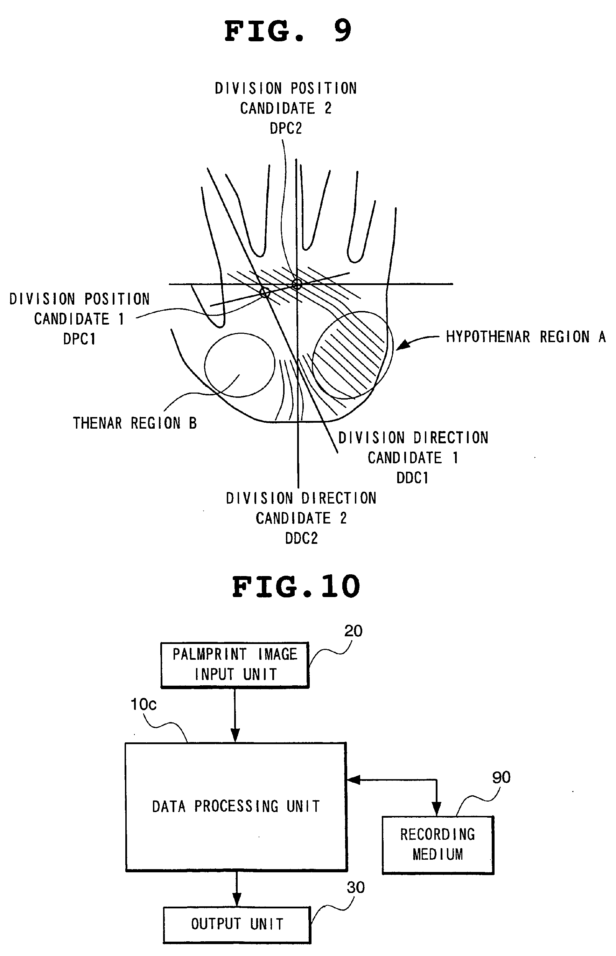

At Step 803 of Fig 8, as illustrated in Fig 9, a direction from the crossing point (CP) toward the finger side of the palm is determined as a division direction candidate 1 (DDC1) and a direction on the thenar region side of the crossing point as a division direction candidate 2 (DDC2).

At Step 804 in Fig. 8, with respect to the division direction candidate 1 (DDC1) and the division direction candidate 2 (DDC2), determine their region dividing positions, a division position candidate 1 (DPC1) and a division position candidate 2 (DPC2) by the same manner as used at Step 404 in Fig. 4. In other words, a crossing point between the hypothenar region thenar region dividing line and the interdigital creases region·thenar and hypothenar regions of palm region dividing line is determined as a division position. Then, directions of the ridge lines at the region dividing positions are regarded as a division position direction 1 and a division position direction 2, respectively.

Then, compare a relationship among the hypothenar region direction, the division direction 1 and the division position direction 1 and a relationship among the hypothenar region direction, the division direction 2 and the division position direction 2 to adopt one that is more similar to a predetermined relationship (relationship in directions of each region and its ridge lines on a common palm) as a division direction. Here, on a common palm, the direction of a division line for the division between a thenar region and a hypothenar region slants clockwise at an angle of 35 degrees from the direction of the ridge lines in the hypothenar region. The direction of the division line for the division between the thenar region and the hypothenar region slants clockwise about 55 degrees from the direction of the ridge lines in the vicinity of a division position. Then, making use of these features of the ridge lines, adopt, as a division direction, one of the division direction candidates 1 and 2 that is more similar to the above-described relationship in the relationship between the slant of the division direction candidate 1 from the ridge line direction in the hypothenar region and the slant of the division direction candidate 1 from the ridge lines in the vicinity of the division position direction 1 and the relationship between the slant of the division direction candidate 2 from the ridge line direction in the hypothenar region and the slant of the division direction candidate 2 from the ridge lines in the vicinity of the division position direction 2.

For example, it is possible to calculate each total of a difference (absolute value) of a slant of a division direction candidate from the ridge line direction in the hypothenar region from a first predetermined angle (35 degrees) and a difference (absolute value) of a slant of the division direction candidate from the ridge lines in the vicinity of the division position direction from a second predetermined angle (55 degrees) to adopt one whose total is smaller as a division direction.

As values of first and second predetermined angles used here, preferable values around the above-described average angles, 35 degrees and 55 degrees, are set in advance. It is also possible to have a function of allowing a user to set a preferable angle according to features of a palm to be divided.

With the palmprint region dividing device according to the above-described embodiments, the functions of the ridge line pattern extracting units 11 and 11a, the hypothenar and thenar region detecting unit 12a, the crossing point detecting unit 13a, the division direction determining units 14a and 14b, the division position determining units 15, 15a and 15b and the like in the data processing units 10, 10a and 10b and the other functions can be realized not only as hardware but also by loading a palmprint region dividing program which is a computer program having the respective functions into a memory of a computer processing device.

Fig. 10 is a diagram showing one embodiment of a structure having a recording medium which records a palmprint region dividing program according to the present invention.

The palmprint region dividing program is stored in a recording medium 90 such as a magnetic disc or a semiconductor memory. Then, loading the program from the recording medium into a data processing unit 10c as a computer processing device to control operation of the data processing unit 10c realizes the above-described respective functions. As a result, the data processing unit 10c executes processing of the data processing units 10, 10a and 10b in the first, second and third embodiments under the control of the palmprint region dividing program.

Although the present invention has been described with respect to the preferred modes and embodiments, the present invention is not limited to those described above but can be embodied as variation within a scope of its technical idea.

As described in the foregoing, the palmprint region dividing device of the present invention attains the following effects.

First, in a case of registering an impressed palmprint of each individual for the purpose of his/her authentification using a palmprint, processing can be automatically conducted of cutting out each of specific regions to divide a palmprint image.

In addition, as described in the second embodiment of the present invention, a palmprint can be appropriately divided by automatic processing into three regions, a hypothenar region, a thenar region and a interdigital creases region. Although some palms fail to have a crossing point in the vicinity of a wrist whose direction is in the direction of fingers of the palm, obtaining a direction of the crossing point either in the direction of the finger side or the thenar region side based on a relationship between a direction of the hypothenar region and a direction of a boundary between the interdigital creases region and the thenar region enables stable division of a palm into regions.

Although the invention has been illustrated and described with respect to exemplary embodiment thereof, it should be understood by those skilled in the art that the foregoing and various other changes, omissions and additions may be made therein and thereto, without departing from the spirit and scope of the present invention. Therefore, the present invention should not be understood as limited to the specific embodiment set out above but to include all possible embodiments which can be embodies within a scope encompassed and equivalents thereof with respect to the feature set out in the appended claims.

## Claims

1. A palmprint region dividing device for dividing an image of a palmprint, which
with respect to each specific region, compares a ridge line pattern of a palmprint to be divided which is extracted from an image of the palmprint and information about features of a common ridge line pattern at said specific region of a palmprint to detect said specific region from the image of the palmprint in question and divide the image of the palmprint in question into each said specific region.

2. The palmprint region dividing device as set forth in claim 1, comprising:
ridge line pattern extracting means (11a) for extracting a ridge line pattern of the palmprint in question from an image of said palmprint input,
hypothenar and thenar regions detecting means (12a) for detecting a hypothenar region and a thenar region using said ridge line pattern extracted,
crossing point detecting means (13a) for detecting a crossing point from said ridge line pattern of a boundary between said hypothenar region and said thenar region,
division direction determining means (14a) for determining a division direction based on a ridge line direction in the vicinity of said crossing point, and
division position determining means (15a) for determining a division line for dividing said palmprint into three regions, the hypothenar region, the thenar region and a interdigital creases region, based on said crossing point, said division direction and said thenar region.

3. The palmprint region dividing device as set forth in claim 2, wherein
said ridge line pattern extracting means (11a) divides said palmprint into a plurality of small regions of predetermined size in which a ridge line direction is constant, and
said hypothenar and thenar regions detecting means (12a) determines, as a hypothenar region direction, a direction whose frequency is the highest among ridge line directions in respective said small regions in the half of said palmprint on the side of the hypothenar region to determine a largest continuous region in said small regions within a predetermined direction difference from said hypothenar region direction as said hypothenar region.

4. The palmprint region dividing device as set forth in claim 2, wherein
said ridge line pattern extracting means (11a) divides said palmprint into a plurality of small regions of predetermined size in which a ridge line direction is constant, and
said hypothenar and thenar regions detecting means (12a) determines, as a hypothenar region direction, a direction whose frequency is the highest among ridge line directions in respective said small regions in the half of said palmprint on the side of the hypothenar region to determine a largest continuous region in said small regions within a predetermined direction difference from said hypothenar region direction as said hypothenar region, and
determines, as said thenar region, a largest continuous region in said small regions in which a ridge line direction orients to the finger side within a predetermined direction difference from said hypothenar region direction and which locates on the thumb side within a predetermined range from said hypothenar region.

5. The palmprint region dividing device as set forth in claim 2, wherein
said division position determining means (15a) determines a straight line passing through said crossing point and being in parallel to said division direction as a hypothenar region · thenar region dividing line, determines, among straight lines vertical to said division direction intersecting with said thenar region, a straight line closest to the finger side of the palmprint image in question as a interdigital creases region · thenar and hypothenar regions of palm region dividing line and determines a crossing point between said hypothenar region · thenar region dividing line and said interdigital creases region · thenar and hypothenar regions of palm region dividing line as a division position.

6. The palmprint region dividing device as set forth in claim 2, wherein
said ridge line pattern extracting means (11a) divides said palmprint into a plurality of small regions of predetermined size in which a ridge line direction is constant,
said hypothenar and thenar regions detecting means (12a) determines, as a hypothenar region direction, a direction whose frequency is the highest among ridge line directions in respective said small regions in the half of said palmprint on the side of the hypothenar region to determine a largest continuous region in said small regions within a predetermined direction difference from said hypothenar region direction as said hypothenar region, and
said division position determining means (15a) determines a straight line passing through said crossing point and being in parallel to said division direction as a hypothenar region · thenar region dividing line, determines, among straight lines vertical to said division direction intersecting with said thenar region, a straight line closest to the finger side of the palmprint image in question as a interdigital creases region · thenar and hypothenar regions of palm region dividing line and determines a crossing point between said hypothenar region · thenar region dividing line and said interdigital creases region · thenar and hypothenar regions of palm region dividing line as a division position.

7. The palmprint region dividing device as set forth in claim 2, wherein
said ridge line pattern extracting means (11a) divides said palmprint into a plurality of small regions of predetermined size in which a ridge line direction is constant,
said hypothenar and thenar regions detecting means (12a) determines, as a hypothenar region direction, a direction whose frequency is the highest among ridge line directions in respective said small regions in the half of said palmprint on the side of the hypothenar region to determine a largest continuous region in said small regions within a predetermined direction difference from said hypothenar region direction as said hypothenar region, and
determines, as said thenar region, a largest continuous region in said small regions in which a ridge line direction orients to the finger side within a predetermined direction difference from said hypothenar region direction and which locates on the thumb side within a predetermined range from said hypothenar region, and
said division position determining means (15a) determines a straight line passing through said crossing point and being in parallel to said division direction as a hypothenar region · thenar region dividing line, determines, among straight lines vertical to said division direction intersecting with said thenar region, a straight line closest to the finger side of the palmprint image in question as a interdigital creases region · thenar and hypothenar regions of palm region dividing line and determines a crossing point between said hypothenar region · thenar region dividing line and said interdigital creases region · thenar and hypothenar regions of palm region dividing line as a division position.

8. The palmprint region dividing device as set forth in claim 2, wherein
said division direction determining means (14a) obtains two directions, a direction from a ridge line direction in the vicinity of said crossing point to the finger side of said crossing point and a direction on said hypothenar region side of said crossing point, as candidates for said division direction, and
said division position determining means (15a) determines said division position and said division direction based on angels formed by respective said division direction candidates with said hypothenar region direction and a ridge line direction in the vicinity of said division position, respectively.

9. The palmprint region dividing device as set forth in claim 2, wherein
said ridge line pattern extracting means (11a) divides said palmprint into a plurality of small regions of predetermined size in which a ridge line direction is constant,
said hypothenar and thenar regions detecting means (12a) determines, as a hypothenar region direction, a direction whose frequency is the highest among ridge line directions in respective said small regions in the half of said palmprint on the side of the hypothenar region to determine a largest continuous region in said small regions within a predetermined direction difference from said hypothenar region direction as said hypothenar region,
said division direction determining means (14a) obtains two directions, a direction from a ridge line direction in the vicinity of said crossing point to the finger side of said crossing point and a direction on said hypothenar region side of said crossing point, as candidates for said division direction, and
said division position determining means (15a) determines said division position and said division direction based on angels formed by respective said division direction candidates with said hypothenar region direction and a ridge line direction in the vicinity of said division position, respectively.

10. The palmprint region dividing device as set forth in claim 2, wherein
said ridge line pattern extracting means (11a) divides said palmprint into a plurality of small regions of predetermined size in which a ridge line direction is constant,
said hypothenar and thenar regions detecting means (12a) determines, as a hypothenar region direction, a direction whose frequency is the highest among ridge line directions in respective said small regions in the half of said palmprint on the side of the hypothenar region to determine a largest continuous region in said small regions within a predetermined direction difference from said hypothenar region direction as said hypothenar region, and
determines, as said thenar region, a largest continuous region in said small regions in which a ridge line direction orients to the finger side within a predetermined direction difference from said hypothenar region direction and which locates on the thumb side within a predetermined range from said hypothenar region,
said division direction determining means (14a) obtains two directions, a direction from a ridge line direction in the vicinity of said crossing point to the finger side of said crossing point and a direction on said hypothenar region side of said crossing point, as candidates for said division direction, and
said division position determining means (15a) determines said division position and said division direction based on angels formed by respective said division direction candidates with said hypothenar region direction and a ridge line direction in the vicinity of said division position, respectively.

11. The palmprint region dividing device as set forth in claim 2, wherein
said division position determining means (15a) determines a straight line passing through said crossing point and being in parallel to said division direction as a hypothenar region · thenar region dividing line, determines, among straight lines vertical to said division direction intersecting with said thenar region, a straight line closest to the finger side of the palmprint image in question as a interdigital creases region · thenar and hypothenar regions of palm region dividing line and determines a crossing point between said hypothenar region · thenar region dividing line and said interdigital creases region · thenar and hypothenar regions of palm region dividing line as a division position,
said division direction determining means (14a) obtains two directions, a direction from a ridge line direction in the vicinity of said crossing point to the finger side of said crossing point and a direction on said hypothenar region side of said crossing point, as candidates for said division direction, and
said division position determining means (15a) determines said division position and said division direction based on angels formed by respective said division direction candidates with said hypothenar region direction and a ridge line direction in the vicinity of said division position, respectively.

12. The palmprint region dividing device as set forth in claim 2, wherein
said division position determining means (15a) determines, as said division direction, one of said division direction candidates which has a smaller total value of an absolute value of a difference between an angle formed with said hypothenar region direction and a first predetermined angle and an absolute value of a difference between an angle formed with a ridge line direction in the vicinity of said division position and a second predetermined angle.

13. The palmprint region dividing device as set forth in claim 2, wherein
said ridge line pattern extracting means (11a) divides said palmprint into a plurality of small regions of predetermined size in which a ridge line direction is constant,
said hypothenar and thenar regions detecting means (12a) determines, as a hypothenar region direction, a direction whose frequency is the highest among ridge line directions in respective said small regions in the half of said palmprint on the side of the hypothenar region to determine a largest continuous region in said small regions within a predetermined direction difference from said hypothenar region direction as said hypothenar region,
said division direction determining means (14a) obtains two directions, a direction from a ridge line direction in the vicinity of said crossing point to the finger side of said crossing point and a direction on said hypothenar region side of said crossing point, as candidates for said division direction, and
said division position determining means (15a) determines said division position and said division direction based on angels formed by respective said division direction candidates with said hypothenar region direction and a ridge line direction in the vicinity of said division position, respectively, and
determines, as said division direction, one of said division direction candidates which has a smaller total value of an absolute value of a difference between an angle formed with said hypothenar region direction and a first predetermined angle and an absolute value of a difference between an angle formed with the ridge line direction in the vicinity of said division position and a second predetermined angle.

14. The palmprint region dividing device as set forth in claim 2, wherein
said division position determining means (15a) determines, as said division direction, one of said division direction candidates which has a smaller total value of an absolute value of a difference between an angle formed with said hypothenar region direction and a first predetermined angle and an absolute value of a difference between an angle formed with a ridge line direction in the vicinity of said division position and a second predetermined angle, said first predetermined angle being about 35 degrees and said second predetermined angle being about 55 degrees.

15. The palmprint region dividing device as set forth in claim 2, wherein
said ridge line pattern extracting means (11a) divides said palmprint into a plurality of small regions of predetermined size in which a ridge line direction is constant,
said hypothenar and thenar regions detecting means (12a) determines, as a hypothenar region direction, a direction whose frequency is the highest among ridge line directions in respective said small regions in the half of said palmprint on the side of the hypothenar region to determine a largest continuous region in said small regions within a predetermined direction difference from said hypothenar region direction as said hypothenar region,
said division direction determining means (14a) obtains two directions, a direction from a ridge line direction in the vicinity of said crossing point to the finger side of said crossing point and a direction on said hypothenar region side of said crossing point, as candidates for said division direction, and
said division position determining means (15a) determines said division position and said division direction based on angels formed by respective said division direction candidates with said hypothenar region direction and a ridge line direction in the vicinity of said division position, respectively, and
determines, as said division direction, one of said division direction candidates which has a smaller total value of an absolute value of a difference between an angle formed with said hypothenar region direction and a first predetermined angle and an absolute value of a difference between an angle formed with the ridge line direction in the vicinity of said division position and a second predetermined angle, said first predetermined angle being about 35 degrees and said second predetermined angle being about 55 degrees.

16. A palmprint region dividing method of dividing an image of a palmprint, comprising the step of,
with respect to each specific region, comparing a ridge line pattern of a palmprint to be divided which is extracted from an image of the palmprint and information about features of a common ridge line pattern at said specific region of a palmprint to detect said specific region from the image of the palmprint in question and divide the image of the palmprint in question into each said specific region.

17. The palmprint region dividing method as set forth in claim 16, comprising:
a ridge line pattern extracting step of extracting a ridge line pattern of the palmprint in question from an image of said palmprint input,
a hypothenar and thenar regions detecting step of detecting a hypothenar region and a thenar region using said ridge line pattern extracted,
a crossing point detecting step of detecting a crossing point from said ridge line pattern of a boundary between said hypothenar region and said thenar region,
a division direction determining step of determining a division direction based on a ridge line direction in the vicinity of said crossing point, and
a division position determining step of determining a division line for dividing said palmprint into three regions, the hypothenar region, the thenar region and a interdigital creases region, based on said crossing point, said division direction and said thenar region.

18. The palmprint region dividing method as set forth in claim 17, wherein
at said ridge line pattern extracting step,
said palmprint is divided into a plurality of small regions of predetermined size in which a ridge line direction is constant, and
at said hypothenar and thenar regions detecting step,
a direction whose frequency is the highest among ridge line directions in respective said small regions in the half of said palmprint on the side of the hypothenar region is determined as a hypothenar region direction to determine a largest continuous region in said small regions within a predetermined direction difference from said hypothenar region direction as said hypothenar region.

19. The palmprint region dividing method as set forth in claim 17, wherein
at said ridge line pattern extracting step,
said palmprint is divided into a plurality of small regions of predetermined size in which a ridge line direction is constant, and
at said hypothenar and thenar regions detecting step,
a direction whose frequency is the highest among ridge line directions in respective said small regions in the half of said palmprint on the side of the hypothenar region is determined as a hypothenar region direction to determine a largest continuous region in said small regions within a predetermined direction difference from said hypothenar region direction as said hypothenar region, and
a largest continuous region in said small regions in which a ridge line direction orients to the finger side within a predetermined direction difference from said hypothenar region direction and which locates on the thumb side within a predetermined range from said hypothenar region is determined as said thenar region.

20. The palmprint region dividing method as set forth in claim 17, wherein
at said division position determining step, a straight line passing through said crossing point and being in parallel to said division direction is determined as a hypothenar region · thenar region dividing line, among straight lines vertical to said division direction intersecting with said thenar region, a straight line closest to the finger side of the palmprint image in question is determined as a interdigital creases region · thenar and hypothenar regions of palm region dividing line and a crossing point between said hypothenar region · thenar region dividing line and said interdigital creases region · thenar and hypothenar regions of palm region dividing line is determined as a division position.

21. The palmprint region dividing method as set forth in claim 17, wherein
at said ridge line pattern extracting step,
said palmprint is divided into a plurality of small regions of predetermined size in which a ridge line direction is constant,
at said hypothenar and thenar regions detecting step,
a direction whose frequency is the highest among ridge line directions in respective said small regions in the half of said palmprint on the side of the hypothenar region is determined as a hypothenar region direction to determine a largest continuous region in said small regions within a predetermined direction difference from said hypothenar region direction as said hypothenar region, and
at said division position determining step, a straight line passing through said crossing point and being in parallel to said division direction is determined as a hypothenar region · thenar region dividing line, among straight lines vertical to said division direction intersecting with said thenar region, a straight line closest to the finger side of the palmprint image in question is determined as a interdigital creases region · thenar and hypothenar regions of palm region dividing line and a crossing point between said hypothenar region · thenar region dividing line and said interdigital creases region · thenar and hypothenar regions of palm region dividing line is determined as a division position.

22. The palmprint region dividing method as set forth in claim 17, wherein
at said ridge line pattern extracting step,
said palmprint is divided into a plurality of small regions of predetermined size in which a ridge line direction is constant,
at said hypothenar and thenar regions detecting step
a direction whose frequency is the highest among ridge line directions in respective said small regions in the half of said palmprint on the side of the hypothenar region is determined as a hypothenar region direction to determine a largest continuous region in said small regions within a predetermined direction difference from said hypothenar region direction as said hypothenar region, and
a largest continuous region in said small regions in which a ridge line direction orients to the finger side within a predetermined direction difference from said hypothenar region direction and which locates on the thumb side within a predetermined range from said hypothenar region is determined as said thenar region, and
at said division position determining step, a straight line passing through said crossing point and being in parallel to said division direction is determined as a hypothenar region · thenar region dividing line, among straight lines vertical to said division direction intersecting with said thenar region, a straight line closest to the finger side of the palmprint image in question is determined as a interdigital creases region · thenar and hypothenar regions of palm region dividing line and a crossing point between said hypothenar region · thenar region dividing line and said interdigital creases region · thenar and hypothenar regions of palm region dividing line is determined as a division position.

23. The palmprint region dividing method as set forth in claim 17, wherein
at said division direction determining step,
two directions are obtained as candidates for said division direction, a direction from a ridge line direction in the vicinity of said crossing point to the finger side of said crossing point and a direction on said hypothenar region side of said crossing point, and
at said division position determining step, said division position and said division direction are determined based on angels formed by respective said division direction candidates with said hypothenar region direction and a ridge line direction in the vicinity of said division position, respectively.

24. The palmprint region dividing method as set forth in claim 17, wherein
at said ridge line pattern extracting step, said palmprint is divided into a plurality of small regions of predetermined size in which a ridge line direction is constant,
at said hypothenar and thenar regions detecting step,
a direction whose frequency is the highest among ridge line directions in respective said small regions in the half of said palmprint on the side of the hypothenar region is determined as a hypothenar region direction to determine a largest continuous region in said small regions within a predetermined direction difference from said hypothenar region direction as said hypothenar region,
at said division direction determining step,
two directions are obtained as candidates for said division direction, a direction from a ridge line direction in the vicinity of said crossing point to the finger side of said crossing point and a direction on said hypothenar region side of said crossing point, and
at said division position determining step,
said division position and said division direction are determined based on angels formed by respective said division direction candidates with said hypothenar region direction and a ridge line direction in the vicinity of said division position, respectively.

25. The palmprint region dividing method as set forth in claim 17, wherein
at said ridge line pattern extracting step,
said palmprint is divided into a plurality of small regions of predetermined size in which a ridge line direction is constant,
at said hypothenar and thenar regions detecting step
a direction whose frequency is the highest among ridge line directions in respective said small regions in the half of said palmprint on the side of the hypothenar region is determined as a hypothenar region direction to determine a largest continuous region in said small regions within a predetermined direction difference from said hypothenar region direction as said hypothenar region, and
a largest continuous region in said small regions in which a ridge line direction orients to the finger side within a predetermined direction difference from said hypothenar region direction and which locates on the thumb side within a predetermined range from said hypothenar region is determined as said thenar region,
at said division direction determining step, two directions are obtained as candidates for said division direction, a direction from a ridge line direction in the vicinity of said crossing point to the finger side of said crossing point and a direction on said hypothenar region side of said crossing point, and
at said division position determining step, said division position and said division direction are determined based on angels formed by respective said division direction candidates with said hypothenar region direction and a ridge line direction in the vicinity of said division position, respectively.

26. The palmprint region dividing method as set forth in claim 17, wherein
at said division position determining step, a straight line passing through said crossing point and
being in parallel to said division direction is determined as a hypothenar region · thenar region dividing line, among straight lines vertical to said division direction intersecting with said thenar region, a straight line closest to the finger side of the palmprint image in question is determined as a interdigital creases region · thenar and hypothenar regions of palm region dividing line and a crossing point between said hypothenar region · thenar region dividing line and said interdigital creases region · thenar and hypothenar regions of palm region dividing line is determined as a division position,
at said division direction determining step,
two directions are obtained as candidates for said division direction, a direction from a ridge line direction in the vicinity of said crossing point to the finger side of said crossing point and a direction on said hypothenar region side of said crossing point, and
at said division position determining step,
said division position and said division direction are determined based on angels formed by respective said division direction candidates with said hypothenar region direction and a ridge line direction in the vicinity of said division position, respectively.

27. The palmprint region dividing method as set forth in claim 17, wherein
at said division direction determining step,
two directions are obtained as candidates for said division direction, a direction from a ridge line direction in the vicinity of said crossing point to the finger side of said crossing point and a direction on said hypothenar region side of said crossing point, and
at said division position determining step,
said division position and said division direction are determined based on angels formed by respective said division direction candidates with said hypothenar region direction and a ridge line direction in the vicinity of said division position, respectively, and
one of said division direction candidates which has a smaller total value of an absolute value of a difference between an angle formed with said hypothenar region direction and a first predetermined angle and an absolute value of a difference between an angle formed with the ridge line direction in the vicinity of said division position and a second predetermined angle is determined as said division direction.

28. The palmprint region dividing method as set forth in claim 17, wherein
at said ridge line pattern extracting step,
said palmprint is divided into a plurality of small regions of predetermined size in which a ridge line direction is constant,
at said hypothenar and thenar regions detecting step, a direction whose frequency is the highest among ridge line directions in respective said small regions in the half of said palmprint on the side of the hypothenar region is determined as a hypothenar region direction to determine a largest continuous region in said small regions within a predetermined direction difference from said hypothenar region direction as said hypothenar region,
at said division direction determining step,
two directions are obtained as candidates for said division direction, a direction from a ridge line direction in the vicinity of said crossing point to the finger side of said crossing point and a direction on said hypothenar region side of said crossing point, and
at said division position determining step,
said division position and said division direction are determined based on angels formed by respective said division direction candidates with said hypothenar region direction and a ridge line direction in the vicinity of said division position, respectively, and
one of said division direction candidates which has a smaller total value of an absolute value of a difference between an angle formed with said hypothenar region direction and a first predetermined angle and an absolute value of a difference between an angle formed with the ridge line direction in the vicinity of said division position and a second predetermined angle is determined as said division direction.

29. The palmprint region dividing method as set forth in claim 17, wherein
at said division direction determining step,
two directions are obtained as candidates for said division direction, a direction from a ridge line direction in the vicinity of said crossing point to the finger side of said crossing point and a direction on said hypothenar region side of said crossing point, and
at said division position determining step,
said division position and said division direction are determined based on angels formed by respective said division direction candidates with said hypothenar region direction and a ridge line direction in the vicinity of said division position, respectively, and
one of said division direction candidates which has a smaller total value of an absolute value of a difference between an angle formed with said hypothenar region direction and a first predetermined angle and an absolute value of a difference between an angle formed with the ridge line direction in the vicinity of said division position and a second predetermined angle is determined as said division direction, said first predetermined angle being about 35 degrees and said second predetermined angle being about 55 degrees.

30. The palmprint region dividing method as set forth in claim 17, wherein
at said ridge line pattern extracting step,
said palmprint is divided into a plurality of small regions of predetermined size in which a ridge line direction is constant,
at said hypothenar and thenar regions detecting step,
a direction whose frequency is the highest among ridge line directions in respective said small regions in the half of said palmprint on the side of the hypothenar region is determined as a hypothenar region direction to determine a largest continuous region in said small regions within a predetermined direction difference from said hypothenar region direction as said hypothenar region,
at said division direction determining step,
two directions are obtained as candidates for said division direction, a direction from a ridge line direction in the vicinity of said crossing point to the finger side of said crossing point and a direction on said hypothenar region side of said crossing point, and
at said division position determining step,
said division position and said division direction are determined based on angels formed by respective said division direction candidates with said hypothenar region direction and a ridge line direction in the vicinity of said division position, respectively, and
one of said division direction candidates which has a smaller total value of an absolute value of a difference between an angle formed with said hypothenar region direction and a first predetermined angle and an absolute value of a difference between an angle formed with the ridge line direction in the vicinity of said division position and a second predetermined angle is determined as said division direction, said first predetermined angle being about 35 degrees and said second predetermined angle being about 55 degrees.

31. A palmprint region dividing program for dividing an image of a palmprint by controlling a computer, comprising the function of,
with respect to each specific region, comparing a ridge line pattern of a palmprint to be divided which is extracted from an image of the palmprint and information about features of a common ridge line pattern at said specific region of a palmprint to detect said specific region from the image of the palmprint in question and divide the image of the palmprint in question into each said specific region.

32. The palmprint region dividing program as set forth in claim 31, comprising:
a ridge line pattern extracting function of extracting a ridge line pattern of the palmprint in question from an image of said palmprint input,
a hypothenar and thenar regions detecting function of detecting a hypothenar region and a thenar region using said ridge line pattern extracted,
a crossing point detecting function of detecting a crossing point from said ridge line pattern of a boundary between said hypothenar region and said thenar region,
a division direction determining function of determining a division direction based on a ridge line direction in the vicinity of said crossing point, and
a division position determining function of determining a division line for dividing said palmprint into three regions, the hypothenar region, the thenar region and a interdigital creases region, based on said crossing point, said division direction and said thenar region.

33. The palmprint region dividing program as set forth in claim 32, which
in said ridge line pattern extracting function,
causes execution of processing of dividing said palmprint into a plurality of small regions of predetermined size in which a ridge line direction is constant, and
in said hypothenar and thenar regions detecting function,
causes execution of a function of determining a direction whose frequency is the highest among ridge line directions in respective said small regions in the half of said palmprint on the side of the hypothenar region as a hypothenar region direction and determining a largest continuous region in said small regions within a predetermined direction difference from said hypothenar region direction as said hypothenar region.

34. The palmprint region dividing program as set forth in claim 32, which
in said ridge line pattern extracting function,
causes execution of processing of dividing said palmprint into a plurality of small regions of predetermined size in which a ridge line direction is constant, and
in said hypothenar and thenar regions detecting function
causes execution of a function of determining a direction whose frequency is the highest among ridge line directions in respective said small regions in the half of said palmprint on the side of the hypothenar region as a hypothenar region direction and determining a largest continuous region in said small regions within a predetermined direction difference from said hypothenar region direction as said hypothenar region, and
causes execution of a function of determining a largest continuous region in said small regions in which a ridge line direction orients to the finger side within a predetermined direction difference from said hypothenar region direction and which locates on the thumb side within a predetermined range from said hypothenar region as said thenar region.

35. The palmprint region dividing program as set forth in claim 32, which
in said division position determining function,
causes execution of a function of determining a straight line passing through said crossing point and being in parallel to said division direction as a hypothenar region · thenar region dividing line, among straight lines vertical to said division direction intersecting with said thenar region, determining a straight line closest to the finger side of the palmprint image in question as a interdigital creases region · thenar and hypothenar regions of palm region dividing line and a crossing point between said hypothenar region · thenar region dividing line and said interdigital creases region · thenar and hypothenar regions of palm region dividing line as a division position.

36. The palmprint region dividing program as set forth in claim 32, which
in said division direction determining function,
causes execution of processing of obtaining two directions, a direction from a ridge line direction in the vicinity of said crossing point to the finger side of said crossing point and a direction on said hypothenar region side of said crossing point, as candidates for said division direction, and
in said division position determining function, causes execution of a function of determining said division position and said division direction based on angels formed by respective said division direction candidates with said hypothenar region direction and a ridge line direction in the vicinity of said division position, respectively.

37. The palmprint region dividing program as set forth in claim 32, which
in said division direction determining function,
causes execution of processing of obtaining two directions, a direction from a ridge line direction in the vicinity of said crossing point to the finger side of said crossing point and a direction on said hypothenar region side of said crossing point, as candidates for said division direction, and
in said division position determining function,
causes execution of a function of determining said division position and said division direction based on angels formed by respective said division direction candidates with said hypothenar region direction and a ridge line direction in the vicinity of said division position, respectively, and
causes execution of a function of determining, as said division direction, one of said division direction candidates which has a smaller total value of an absolute value of a difference between an angle formed with said hypothenar region direction and a first predetermined angle and an absolute value of a difference between an angle formed with the ridge line direction in the vicinity of said division position and a second predetermined angle.

38. The palmprint region dividing program as set forth in claim 32, which
in said division direction determining function,
causes execution of processing of obtaining two directions, a direction from a ridge line direction in the vicinity of said crossing point to the finger side of said crossing point and a direction on said hypothenar region side of said crossing point, as candidates for said division direction, and
in said division position determining function
causes execution of a function of determining said division position and said division direction based on angels formed by respective said division direction candidates with said hypothenar region direction and a ridge line direction in the vicinity of said division position, respectively, and,
causes execution of a function of determining, as said division direction, one of said division direction candidates which has a smaller total value of an absolute value of a difference between an angle formed with said hypothenar direction and a first predetermined angle and an absolute value of a difference between an angle formed with the ridge line direction in the vicinity of said division position and a second predetermined angle, said first predetermined angle being about 35 degrees and said second predetermined angle being about 55 degrees.
